# EUROPÄISCHE PATENTSCHRIFT

(11) **EP 0 882 677 B1**
(45) Veröffentlichungstag und Bekanntmachung des Hinweises auf die Patenterteilung: **21.03.2001**
(21) Anmeldenummer: 98107714.2
(22) Anmeldetag: 28.04.1998
(51) Int. Cl.: C02F 11/00, B01D 29/11

(54) **Einrichtung zum Entwässern von Schlamm**
Apparatus for the dewatering of sludge
Dispositif pour la déshydratation de boues

(30) Priorität: 02.05.1997 DE 19718502
(43) Veröffentlichungstag der Anmeldung: 09.12.1998
(73) Patentinhaber: Passavant-Roediger Umwelttechnik GmbH, 65322 Aarbergen (DE)
(72) Erfinder: Schmitt, Wälti, 65307 Bad Schwalbach (DE); Dietrich, Wilhelm, 65582 Diez (DE)

(56) Entgegenhaltungen:
- WO-A-96/39558
- CH-A- 341 797
- DE-A- 3 616 625
- DE-C- 241 668
- US-A- 2 730 242

## Beschreibung

Die Erfindung bezieht sich auf eine Einrichtung zum Entwässern von Schlamm aller Art, insbesondere jedoch von Klärschlamm, durch Filtration mittels langgestreckter Fliterkerzen.

Aus der DE 29 49 520 A1 ist eine liegend angeordnete Filtereinrichtung für dickschlammige Gemische bekannt, die zwei koaxial zu der Achse des rohrförmigen Behälters und konzentrisch zueinander angeordnete Filterkerzen unterschiedlichen Durchmessers enthält. Im Ringraum zwischen den Filterkerzen befindet sich eine Schraubwendel, die das durch den Ringraum während der Filtration geförderte Gemisch umbrechen soll. Das am einen Ende in den Ringraum geförderte Gemisch durchläuft den Ringraum und wird am anderen Ende entwässert über eine von einem federbelasteten Gegendruckkolben beaufschlagte Öffnung entleert. An die Filtratseiten der Filterkerzen sind jeweils Filtratablaufleitungen angeschlossen. Die Filterkerzen sind mehrschichtig mit Siebflächen, Gitternetzen und Filtergeweben belegt. Zum Säubern der Filtertücher ist eine Rückspüleinrichtung erforderlich. Während der Rückspülung ist der Filterbetrieb unterbrochen.

Diese Entwässerungseinrichtung ist noch nicht optimal. Es steht zu befürchten, daß Dickschlammgemische, deren Feststoffgehalt während des Durchlaufs steigt, den durch die Schraubwendel verlängerten Ringraum verstopfen. Diese Verstopfung ist auch durch Rückspülung nicht zu beseitigen. Ein weiterer Nachteil ist in dem diskontinuierlichen Betrieb zu sehen, der durch die Notwendigkeit der Rückspülung der Filterkerzen bedingt ist.

Bei der aus der EP 0 553 783 A1 bekannten Schneckenschlammpresse (sog. Hydro-extractor) ist die im Ringraum zwischen den Filterkerzen angeordnete Schraubwendel drehbar und angetrieben und dient dadurch als Weiterförderelement für den im freien Zulauf eingespeisten Schlamm und als Druckelement zum Aufbringen des Filtrationsdrucks. Die Filterkerzen bestehen hier aus Siebblech mit angepaßter Lochgröße und glatter Oberfläche. Zum Freilegen der Sieblöcher sind in der inneren Filterkerze ein drehbares Spritzdüsenrohr und eine wendelförmige Bürste vorgesehen. In einer Variante dieser Bauform können eine oder beide Filterkerzen drehbar gelagert und mit von der Schraubwendel abweichenden Drehzahl angetrieben sein.

Auch diese Entwässerungspresse ist zu aufwendig und nicht für einen kontinuierlichen Betrieb geeignet. Da ein Gehäuse für die Filterkerzen fehlt, muß das Filtrat anderweitig aufgefangen und abgeleitet werden. Auch der entwässerte Schlamm hat keine eigene Abzugsleitung.

Aus dieser Schilderung der bekannten Entwässerungseinrichtungen leitet sich die Aufgabenstellung ab. Es sollte eine Schlammentwässerungseinrichtung mit zwei konzentrisch und koaxial angeordneten Filterkerzen urd im Ringraum vorgesehener Schraubwendel derartig verbessert werden, daß der Betrieb kontinuierlich, d. h. ohne Rückspülung, erfolgen kann und daß die Gefahr von Verstopfungen mit möglichst geringem Aufwand beseitigt wird.

Diese Aufgabe wird durch die in Anspruch 1 aufgeführten Merkmale gelöst. Die Ansprüche 2 und 3 nennen vorteilhafte konstruktive Ausgestaltungen der Einrichtung nach Anspruch 1.

Die Aufstellung der mit einem rohrförmigen Behälter ausgerüsteten Entwässerungseinrichtung in stehender Lage bringt den Vorteil mit sich, daß der Filtrationsdruck schon von der über den Filterkerzen stehenden Wassersäule aufgebracht wird. Eine Druckerzeugungseinrichtung ist demnach nicht erforderlich. Die angetrieben drehbare Schraubwendel kann jetzt hier nicht nur zum Umschichten des Schlamms während der Filtration, sondern auch zum ständigen Säubern der Siebschlitze benutzt werden. Da die Siebschlitze und die anliegende Kante der Schraubwendel einen spitzen Winkel bilden und die hintere Kante der Siebschlitze überhöht ist, übt die Kante der Schraubwendel einen Sog auf die in der Vertiefung ruhenden Schlammpartikel aus und reißt sie aus dem Siebschlitz heraus. Auch die Strömung des Schlamms selber wirkt in diesem säubernden Sinn. Da die Filterkerzen nicht mit Filtertuch belegt sind, tritt durch die abstreifende Anlage der Stirnkante der Schraubwendel kein Verschleiß auf.

Die stehende Anordnung einer Entwässerungseinrichtung mit Filterkerzen und drehbarer Schraubwendel ist zwar aus der EP 0 605 018 A2 bekannt; dort ist aber nur eine innenliegende Filterkerze mit entsprechend geringerer Filterfläche vorgesehen. In der anderen Bauart mit mehreren konzentrisch zu einer zentralen Filterkerze angeordneten Filterkerzen laufen zwei Schraubwendel innerhalb und außerhalb des Rings von Filterkerzen um.

Diese Schraubwendel können die Filterkerzen nicht säubern.

Die Erfindung wird nachfolgend anhand von Zeichnungen, die mehrere Ausführungsformen darstellen, noch ausführlicher erläutert Es zeigen:
- Fig. 1: einen Achsschnitt durch den Druckbehälter einer ersten Ausführungsform,
- Fig. 2: eine vergrößerte Darstellung des oberen und unteren Abschnitts des Druckbehälters einer zweiten Ausführungsform,
- Fig. 3: eine Draufsicht auf den gemeinsamen Drehantrieb für sieben auf einem Kreis angeordnete Schraubwendel von Druckbehältern,
- Fig. 4: ein Detail einer Filterkerze im Schnitt.

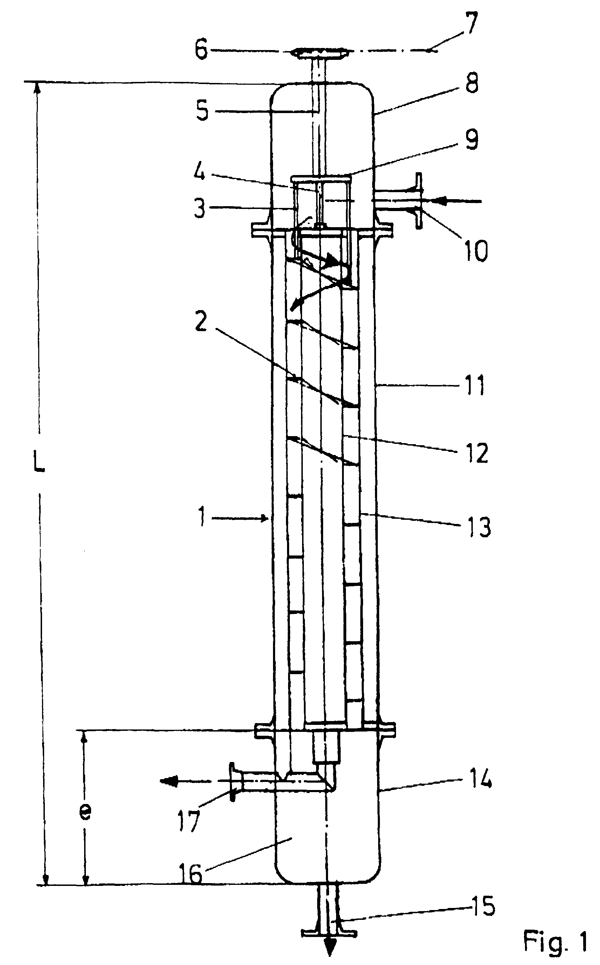

Bei dem Ausführungsbeispiel nach Fig. 1 hat der Druckbehälter 1 eine langgestreckte, stehend aufgestellte Bauform. Er ist aus einem rohrförmigen Mittelteil 11 und zwei Verschlußabschnitten 8 (Deckel) und 14 (Boden) zusammengesetzt, die jeweils an das Mittelteil angeflanscht sind. Der Boden weist an der tiefsten Stelle eine Austragleitung 15 für den entwässerten Schlamm auf, in der eine nicht dargestellte Drosseleinrichtung vorgesehen ist, die den Filtrationsdruck erzeugt. Der Zulauf 10 für den Schlamm befindet sich im Deckelteil 8. Die in der Behälterachse liegende innere Filterkerze 12 wird unten von einem abgewinkelt nach außen geführten Filtratablaufrohr 17 und oben von einem Lagerzapfen 4 getragen. Die äußere Filterkerze 13 wird oben und unten von je einem Speichenkranz getragen, der an den Flanschen des Mittelteils 11 angesetzt ist. Der Lagerzapfen 4 ruht in einer Hohlwelle 5, die den Antrieb für eine in dem Ringraum zwischen innerer und äußerer Filterkerze arbeitenden Schraubwendel 2 darstellt. Als Antrieb dient eine Kette 7 mit einem Kettenritzel 6. Die Verbindung zwischen Hohlwelle 5 und Schraubwendel 2 ist als Speichenrad 9 und eine Schar von Längsstäben 3 ausgebildet.

Die Schraubwendel endet an der Unterkante der Filterkerzen. Auf diese Weise wird der Bodenteil 14, der im Verhältnis zur Gesamthöhe L der Einrichtung eine Hohe e hat, als Eindickraum 16 genutzt, aus dem das dort aus dem Schlamm durch den hydrostatischen Druck ausgetriebene Wasser nach oben steigen und durch die Filterkerzen abfließen kann.

Im Betrieb wird der oben zugeförderte Schlamm von der mindestens zeitweise in Drehung versetzten Schraubwendel 2 durch den Ringraum geführt und dabei durch Abfluß von Filtrat immer weiter aufkonzentriert. Die Schraubwendel kann je nach Schlammart kurzzeitig angehalten und ggf. in Gegenrichtung gedreht werden. Dadurch kann sich der Schlamm noch einmal umschichten und das in Zwickeln oder Kapillaren festgehaltene Wasser abgeben.

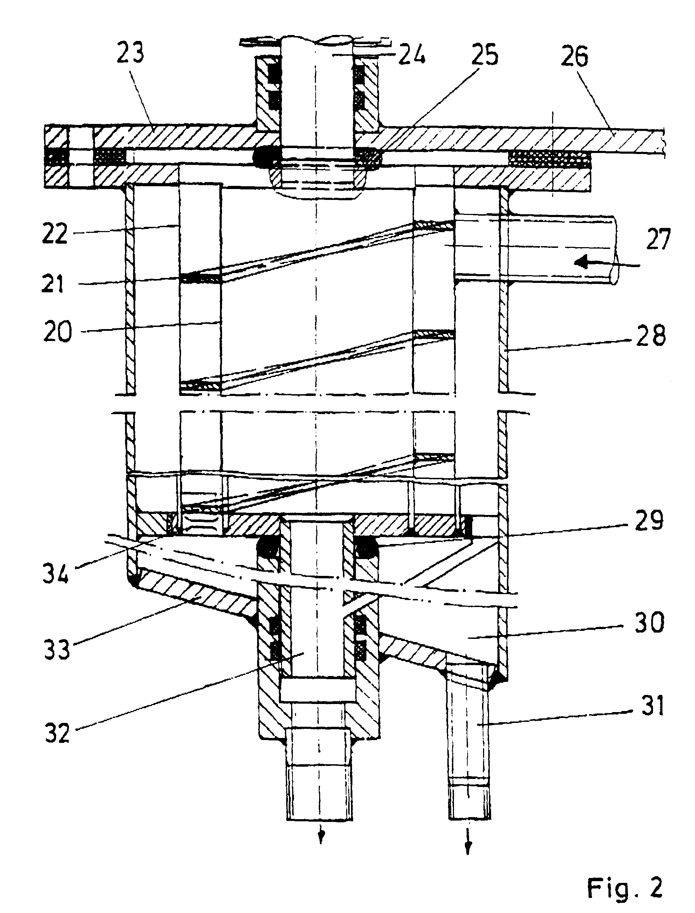

Bei der zweiten Ausführungsform nach Fig. 2 ist abweichend von dem nach Fig. 1 das langgestreckte Deckelteil weggelassen und durch eine Deckelplatte 23 ersetzt, in der die Antriebswelle 24 für die beiden unten durch Speichen 34 verbundenen Filterkerzen 20, 22 gelagert ist. Die innere Filterkerze 20 ist unten durch eine Scheibe verschlossen, durch die die als Lagerbuchse 32 ausgebildete Filtratabfuhrleitung weggeführt ist. Diese durchdringt ihrerseits den mit seitlichem Gefälle verlaufenden Boden 33 des Druckgehäuses 28. An der tiefsten Stelle 30 beginnt der Auslaß 31 für den entwässerten Schlamm.

Die Schraubwendel ist in diesem Fall feststehend. Sie ist mit dem Flansch des Mittelteils verbunden. Die Filterkerzen sind oben und unten durch Rundprofil-Dichtringe 25, 29 gegen Gehäuseflächen abgedichtet.

Im Betrieb erfolgt durch die Reibungsmitnahme des Schlamms an den Filterflächen auch hier eine Umschichtung, die zu einer besseren Entwässerung führt.

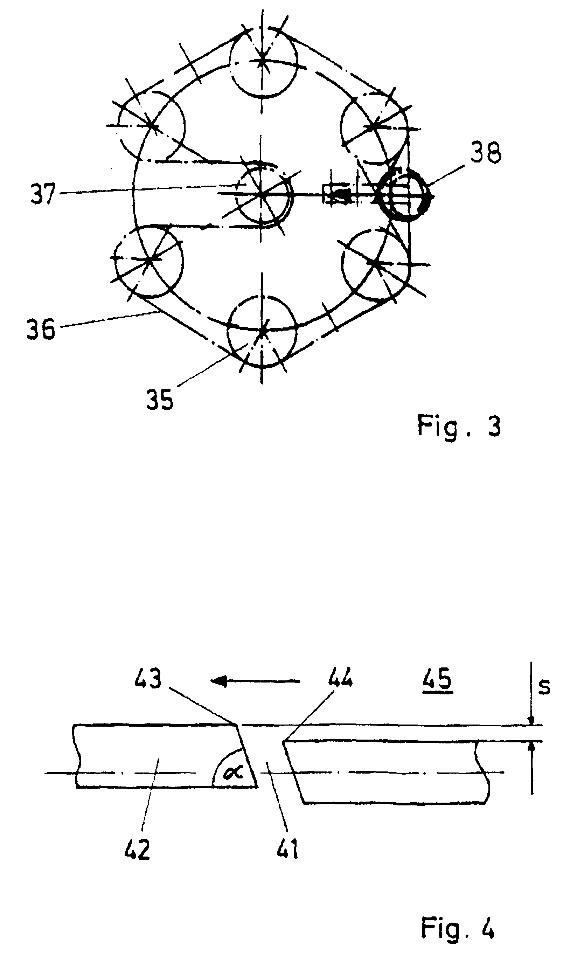

Nach Fig. 3 sind mehrere der Fig. 2 gezeigten Druckbehälter an einer gemeinsamen Tragplatte 26 befestigt und durch einen gemeinsamen Kettenantrieb 36 angetrieben. Die Kette läuft dabei um die sechs Kettenräder 35 der ringförmig angeordneten Druckbehälter und dann um das Kettenrad des zentralen Druckbehälters. Das Antriebskettenrad 38 ist unter Federbelastung von außen an die Kette gedrückt.

Die sieben Druckbehälter werden von einer nicht dargestellten Pumpe mit Schlamm versorgt. In den Zufuhrleitungen können Schließventile vorgesehen sein, die eine zeitweilige Außerbetriebnahme eines Druckbehälters ermöglichen.

Fig. 4 zeigt im Detail den Schnitt durch einen Entwässerungsschlitz 41 einer Filterkerze 42. Der Schlitz verläuft unter einem Winkel α zur Filterfläche. Die Schlammseite der Filterkerze und die Arbeitsfläche der Schraubwendel ist mit 45 gekennzeichnet. Zwischen der Vorderkante und der Hinterkante des Schlitzes besteht ein Höhenunterschied s. Dieser Höhenunterschied wird beim Stanzen der Schlitze gebildet. Die arbeitende, d. h. abstreifende Kante der Schraubwendel berührt jeweils die hochstehende Kante des Schlitzes. Wenn sie dann anschließend über die vertieft liegende Kante des Schlitzes läuft, erzeugt sie einen Sog auf den dort vorhandenen Filterkuchen und räumt ihn weg. Auf diese Weise kann diese Entwässerungseinrichtung lange Zeit ohne Rückspülung arbeiten. Die Filterkerzen sind sozusagen selbstreinigend.

## Patentansprüche

1. Einrichtung zur kontinuierlichen Entwässerung von Schlamm, insbesondere Klärschlamm, bestehend aus
- einem rohrförmigen Druckbehälter mit mindestens
- zwei einen Ringraum zwischen sich bildenden, koaxial und konzentrisch zueinander angeordneten Filterkerzen unterschiedlichen Durchmessers,
- einer im Ringraum angeordneten Schraubwendel
- einer von einer Schlammförderpumpe gespeisten Schlammzuführleitung, die an einem Ende in den Ringraum mündet,
- einer von einer Gegendruckeinrichtung beaufschlagten Auslaßeinrichtung für den entwässerten Schlamm am gegenüberliegenden Ende des Ringraums,
- und von der Rückseite der Filterkerzen abgehenden Filtratabfuhrleitungen
**dadurch gekennzeichnet,** daß
- der Druckbehälter (1, 28) mit Durchlauf von oben nach unten in an sich bekannter Weise vertikal aufgestellt ist.
- die Schraubwendel (2, 21) zwecks Weiterförderung des Schlamms in an sich bekannter Weise um ihre Achse drehbar ist,
- die Schraubwendel (2, 21) zur abstreifenden Anlage an den beiden den Ringraum begrenzenden Flächen der Filterkerzen (12, 13, 20, 22) ausgebildet ist, und
- die Filterkerzen (12, 13, 20, 22) als Entwässerungsmedium Schlitze (41) aufweisen, deren in Weiterförderrichtung der Schraubwendel gesehen hintere Kante (43) gegenüber der vorderen Kante (44) um einen Betrag (s) erhöht ist.

2. Einrichtung nach Anspruch 1, **dadurch gekennzeichnet**, daß die innere Filterkerze (12, 20) von ihrer Filtratablaufleitung (17, 32) getragen wird.

3. Einrichtung nach Anspruch 2, **dadurch gekennzeichnet**, daß die äußere Filterkerze (13, 22) mit der inneren Filterkerze(12, 20) über ein Speichenrad (34) verbunden ist, das von der Filtratablaufleitung (17, 32) der inneren Filterkerze (12, 20) getragen wird.

## Claims

1. Device for continuous dewatering of sludge, particularly sewage sludge, comprising
- a tubular pressure recipient including at least
- two filter cartridges with different diameters being positioned coaxially and concentrically so that they form an annular space in-between,
- a winding helix positioned within the annular space.
- a sludge inlet pipe fed by a sludge delivery pump, leading with one end into the annular space,
- an outlet valve, activated by a counter-pressure system, for discharge of dewatered sludge at the opposite end of the annular space,
- and, finally, filtrate discharge pipes connected to the back of the filter cartridges
**characterized in that**
- the pressure tube (1, 28) with a throughflow from top to bottom is positioned upright, a common way, that
- the winding helix (2, 21) for the purpose of conveying the sludge, is rotating around its axis, also common knowledge, that
- the winding helix (2, 21) is formed at both ends limiting the annular space at the surfaces of the filter cartridges (12, 13, 20, 22), as a scraping means and that
- the filter cartridges (12, 13, 20, 22) are provided with slots (41), intended for dewatering, the rear edge of these slots - looking in the conveying direction of the winding helix - being higher than the front edge by an amount (s).

2. Device according to claim 1, **characterized in that** the inner filter cartridge (12, 20) is supported by its discharge pipe (17, 32).

3. Device according to claims 2, **characterized in that** the outer filter cartridge (13, 22) is connected to the inner filter cartridge (12, 20) via a spoke wheel (34) which is supported by the filtrate discharge pipe (17, 32) of the inner filter cartridge (12, 20).

## Revendications

1. Dispositif destiné à la déshydratation des boues, particulièrement des boues d'épuration consistant en
- un réservoir tubulaire sous pression incluant au moins
- deux cartouches filtrantes d'un diamètre différent positionnées coaxialement et de façon concentrique formant entre eux un espace annulaire,
- une vis racleur placée dans l'espace annulaire,
- une conduite d'amenée de boues alimentée par une pompe de circulation de boues, débouchant avec une extrémité dans l'espace annulaire,
- une soupape de décharge pour les les boues déshydratées, commandée apr un système de contre-pression, se trouvant au côté opposé de l'espace annulaire,
- et des conduites de sortie du filtrat partant de l'arrière de la cartouche filtrante,
**caractérisé en ce que**
- le réservoir tubulaire de pression (1, 28) avec un courant du haut en bas est placé verticalement, une manière généralement reconnue
- la vis racleur (2, 21) tourne autour de son axe afin de transporter les boues, une manière généralement reconnue,
- la vis racleur (2, 21) est formée comme racloir pour les deux surfaces des cartouches filtrantes (12, 13, 20, 22) limitant l'espace annulaire et
- les cartouches filtrantes (12, 13, 20, 22), comme moyen de déshydratation, sont pourvues des fentes (41) dont l'arête arriere (43) - vu par rapport en sens de transport de la vis racleur - dépasse l'arête avant en hauteur d'un montant (s).

2. Dispositif selon revendication 1, **caractérisé en ce que** la cartouche filtrante intérieure (12, 20) est supportée par sa conduite de décharge du filtrat (17, 32).

3. Dispositif selon revendication 2, **caractérisé en ce que** la cartouche filtrante extérieure (13, 22) est reliée avec la cartouche filtrante intérieure (12, 20) par l'intermédiaire d'une roue à rayons (34), laquelle est supportée par la conduite de décharge du filtrat'(17, 32) de la cartouche filtrante intérieure (12, 20).
